# EUROPEAN PATENT SPECIFICATION

(11) **EP 0 257 092 B1**
(45) Date of publication and mention of the grant of the patent: **18.06.2003**
(21) Application number: 87901882.8
(22) Date of filing: 17.02.1987
(51) Int. Cl.: C03C 13/00, C03C 13/06, C04B 35/22

(54) **USE OF INORGANIC FIBERS CONSISTING OF Al 2O3, MgO, CaO AND SiO2**
VERWENDUNG ANORGANISCHER FASERN, BESTEHEND AUS TONERDE, MAGNESIUMOXID, KALZIUMOXID UND SILIZIUMDIOXID
UTILISATION DES FIBRES INORGANIQUES CONSISTANT EN Al 2O3, MgO, CaO et SiO2

(30) Priority: 20.02.1986 US 831217; 07.08.1986 US 894175
(43) Date of publication of application: 02.03.1988
(73) Proprietor: THE MORGAN CRUCIBLE COMPANY PLC, Windsor, Berkshire SL4 1EP (GB)
(72) Inventor: OLDS, Leonard, Elmo, Castle Rock, CO 80104 (US); KIELMEYER, William, Henry, Englewood, CO 80110 (US)
(74) Representative: Boff, James Charles
(86) International application number: US8700313
(87) International publication number: WO87005007

(56) References cited:
- EP-A- 0 076 677
- WO-A-85/02394
- AU-B- 0 255 803
- DE-A- 1 942 991
- FR-A- 1 165 275
- FR-A- 1 589 410
- GB-A- 810 773
- GB-A- 0 520 247
- GB-A- 1 273 251
- SU-A- 607 807
- SU-A- 0 607 807
- US-A- 2 051 279
- US-A- 2 576 312
- US-A- 4 366 251
- H. FOERSTER et al, 1982 WHO IARC Conference, Copenhagen, Vol. 2, pp 27-55 (1984)
- R. KLINGHOLZ and B. STEINKOPF, Proc. Occupational Health Conf., Copenhagen, pp. 60-86 (April 1982)
- B. BELLMANN et al, Aerosol Scientist, vol. 17, No. 3, pp 341-345 (1986)
- H. SCHOLZE and R. CONRADT, 1986 WHO IARC Conference, Copenhagen
- J.P.LEINEWEBER, Proc. Occupational Health Conference, Copenhagen, April 1982, pp. 88-101
- J.G. MOHR, W.P.ROWE "Fiberglass", Van Nostrand Reinhold Company, New York, Chapter II, pages 5-23 (1978)
- H. OHTA and Y. SUZUKI, Ceram. Bull 57 (6), pages 602-4 (1978)
- Comité Européen de Normalization CEN Document CEN/TC/187/WG3/N43 (Sept 1993) "Classificaion of Insulating Products Made from Ceramic Fibres", Geneva, WHO, pages 11-23 (1988)
- J.G.MOHR, W.P. ROWE: "Fiberglass, pages 70, 71", 1978, VAN NOSTRAND REINHOLD, NEW YORK
- I.C. ALEXANDER, G.A.JUBB, Glastechnische Berichte Glass Sci. Technol. 70 (1997), no.12, pages 382-388
- N. McALFORD, J.D.BIRCHALL, J. Metrals Science 20 (1985), pages 37-45
- IPCS International Programme of Chemical Safety, Environmental Health Criteria, 1977: Man Made Vitreous Fibers

## Description

### Field of the Invention

This invention relates to an inorganic fiber composition made from oxide melts. More particularly, it relates to the use of inorganic fibers made from silica, calcium oxide, magnesia and optionally, alumina, in mat or blanket form, as thermal insulation.

### Background of the Invention

For many years inorganic fibers, generically referred to in the industry as "mineral wool fibers", made from slag, rock, fly ash, and other by-product raw materials have been manufactured. These fibers have almost invariably had some degree of alumina content and have been typically manufactured by melting the slag, rock, etc., containing alumina and other oxides such as silica, allowing the molten material to be blown by gas or steam or to impinge on rotors at high speed and causing the resulting blown or spun fibers to be accumulated on a collecting surface. These fibers are then used in bulk or in the form of mats, blankets, and the like as high temperature insulation. However, whereas such mineral wool insulation products have had some degree of commercial acceptance they are not without some disadvantages.

To begin with, the slag, rock, and other materials from which mineral wool fibers are commonly made may contain relatively high amounts of undesired oxides and other materials which not only do not impart any degree of refractoriness to the manufactured fiber, but in many instances actually detract from such. This also detrimentally affects the general fire resistance properties of the fiber. Additionally, since the slag, rocks, and other by-product raw materials are so highly variable in composition, it is very time consuming, laborious, and in many instances, virtually impossible to try to adequately control the metal oxide content of the manufactured fiber to within specified limits. Unfortunately, this means that mineral wool fibers used in bulk or in the form of mats, blankets, and the like offer no real guarantee of a continuous service temperature. These foregoing cited problems with the manufacture and use of traditional mineral wool fibers signifies that improvements are needed.

What is needed in the industry is a relatively low cost and effective replacement for traditional mineral wool fibers. Specifically, a replacement fiber which is easy to make and control the composition of within strict limits and which offers a continuously high service temperature would be highly desirable. Fibers which also have good fire resistance properties are additionally highly desirable and sought after by those in the industry.

### Summary of the Invention

Applicants have developed an inorganic fiber which is an economical and effective substitute for traditional mineral wool fibers. The Applicants have discovered that not only does the fiber have a continuously high service temperature, but also quite surprisingly has a superior solubility in some types of fluids.

The fiber has a composition consisting of 29-44 wt % CaO, 55-64 wt % SiO₂, 0.1-8 wt % HgO, and 0-4 wt % Al₂O₃. These fibers have particularly good fire resistance properties as well as good refractory properties.

By making the fiber composition directly from a melt of metal oxides rather than raw by-product materials of widely varying composition which can contain relatively high amounts of materials other than the desired metal oxides, the foregoing problems associated with making and using traditional mineral wool fibers are eliminated.

Since the fibers are made directly from the oxide form of the metals used, time consuming and laborious procedures are not needed to formulate a desired composition within a specified range. Furthermore, the fibers will now have a continuous service temperature which guarantees their ability to be utilized in situations where such a continuous service temperature is needed. In fact, as shown later herein, the fibers have a continuous service temperature of as high as 816°C (1500°F). Since the major undesired components of slag, rock, etc., previously found in traditional mineral wool fibers are not present in the fibers, the latter have a high degree of refractoriness and thus can be utilized in the lower service temperature ranges of normal refractory fibers having a high alumina. content which tends to make them relatively expensive.

These and other aspects as well as the several advantages of Applicants invention are apparent from the specification and appended claim.

### Detailed Description of the Invention

The invention herein comprises the use of inorganic fibers in mat of blanket form made from a melt consisting essentially of SiO₂, CaO, HgO, and, optionally, Al₂O₃. The inventive fiber is made from a melt consisting essentially of about: 29-44 wt % CaO, 55-64 wt % SiO₂, 0.1-8 wt % HgO, and about 0-4 wt % Al₂O₃. The fibers of the present invention have exhibited continuous service temperatures as high as in the range of about 743°C (1370°F) to about 815°C (1500°F).

The metal oxides of the composition are available in a relatively pure form from many commercial sources. Physical variables such as particle size may be chosen on the basis of cost, handleability, and similar considerations. Purity of the oxides used must be maintained at a relatively high level, such. that no more than about 1% to 2% impurities in the form of other oxides, organic materials and the like are present in the finished fiber, since the presence of such impurities will have detrimental effects on the temperature rating of the fiber.

As used herein, the "service temperature" of fiber is determined by two parameters. The first is the obvious condition that the fiber must not melt or sinter at the temperature specified. It is this criterion which precludes the use of many of the glass and mineral wool fibers at temperatures above 1200°F (650°C). Second. a felt or blanket made from the fibers must not have excessive shrinkage at its service temperature. "Excessive shrinkage" is usually defined to be a maximum of 5% linear shrinkage after prolonged exposure (usually for 24 hours) at the service temperature. Shrinkage of mats or blankets used as furnace liners and the like is of course a critical feature, for when the mats or blankets shrink they open fissures between them through which the heat can flow, thus defeating the purpose of the insulation. Thus, a fiber rated as a "1500°F (815°C) fiber" would be defined as one which does not melt or sinter and which has acceptable shrinkage at that temperature, but which begins to suffer in one or more of the standard parameters at temperatures above 1500°F (815°C).

The fiber is formed in conventional inorganic fiber forming equipment and using standard inorganic fiber forming techniques. Normally production will be by electric furnace melting. The various raw materials are granulated to a size commonly used for fiber melt materials, or may be purchased already so granulated. The granulated raw materials are mixed together and fed to the electric furnace where they are melted by electrical resistance melting. Melt formation may be continuous- or batch-wise melting, although the former is much preferred. The molten mixture of oxides is then fed to fiber forming devices, such as spinners or blowers. A number of types of devices for fiber formation are well known and need not be described here. The fibers so formed will have lengths of 0.5 to 20 cm and diameters on the order of 0.5 to 10 µm with the average fiber diameter being about 1.5 to 3.5 µm. After fiberization the fibers may be collected in bulk or passed into separate devices intended to form the fibers into mats or blankets. The techniques heretofore commonly used to form similar articles of high temperature alumino-silicate refractory fibers are quite suitable for use with the fibers of the present-invention.

The following examples further illustrate the present invention.

### EXAMPLE I

A series of fibers A to O were made according to the foregoing generalized procedure. Their respective compositions along with their service temperature ratings are given in Table I. Fibers A through G, I, K, M and O are not in accordance with the invention.

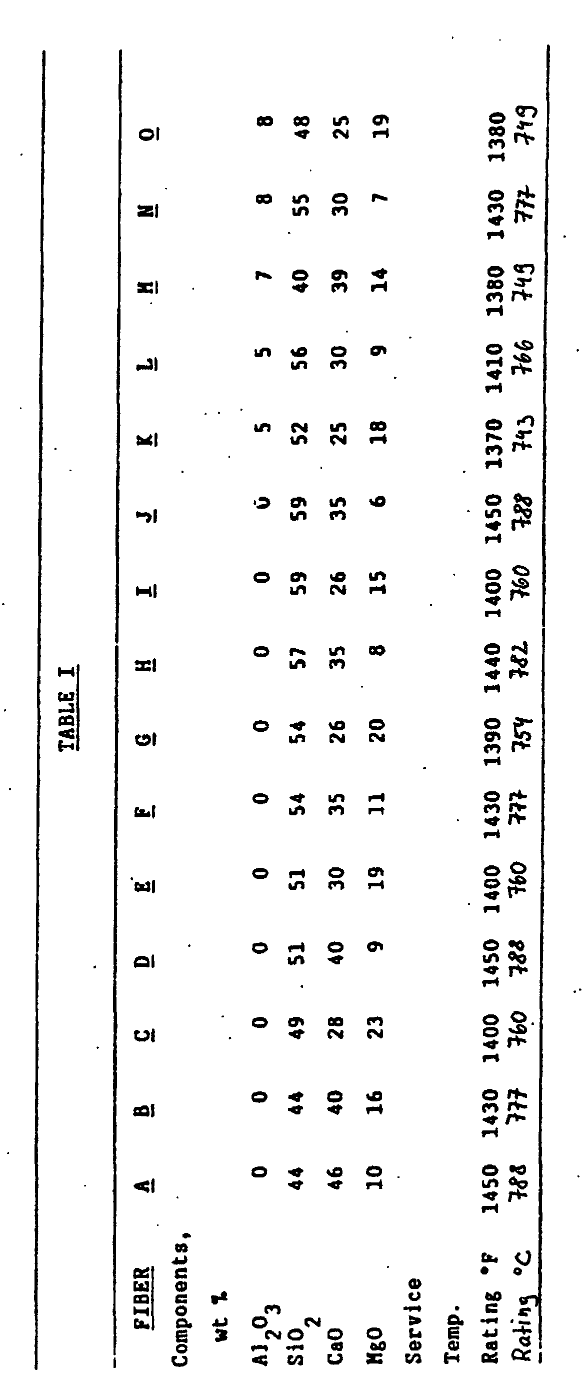

The foregoing data clearly demonstrate that the fibers would be very useful in higher temperature ranges, e.g. 743 to 815°C (1370°F to 1500°F) where it was either virtually impossible or very difficult to formulate the traditional mineral wool fibers that could be used in that range. It should be noted that fiber H was particularly fast melting and fiber L had particularly good fiberization properties.

### EXAMPLE II

A series of fibers A to I were made having the compositions given in Table II. Fibers A-F are not in accordance with the invention.

Each fiber was then tested for its fire resistance according to the following simulated fire rating test procedure:

For screening test purposes, a small furnace was constructed using an electrically heated flat-plate element at the back of the heat source. A 15.24 cm x 15. 24 cm x 5.08cm (6 inch x 6 inch x 2 inch)(thick) sample of 28.0 to 48.1 kg/m³ (1-3/4 to 3 pcf) density of each formulated fiber was mounted parallel with the element and 2.54 cm (1 inch) from it. Thermocouples were then positioned at the center of the fiber sample surfaces. A computer was used to control power via a simple on-off relay system to the heating element. The position of the relay was based on the reading of the thermocouple on the sample surface nearest the element and the programmed fire test heat-up schedule.

The furnace was heated so as to follow a standard ASTM E-119 time/temperature curve for a period of 1 hour and 2 hours respectively. In the test utilized herein, failure of the fiber is considered to occur when the furnace is unable to maintain the standard temperature per ASTM E-119 because the fiber insulation has sintered sufficiently to allow heat to escape through the furnace wall.

The test results for each fiber are given in Table II.

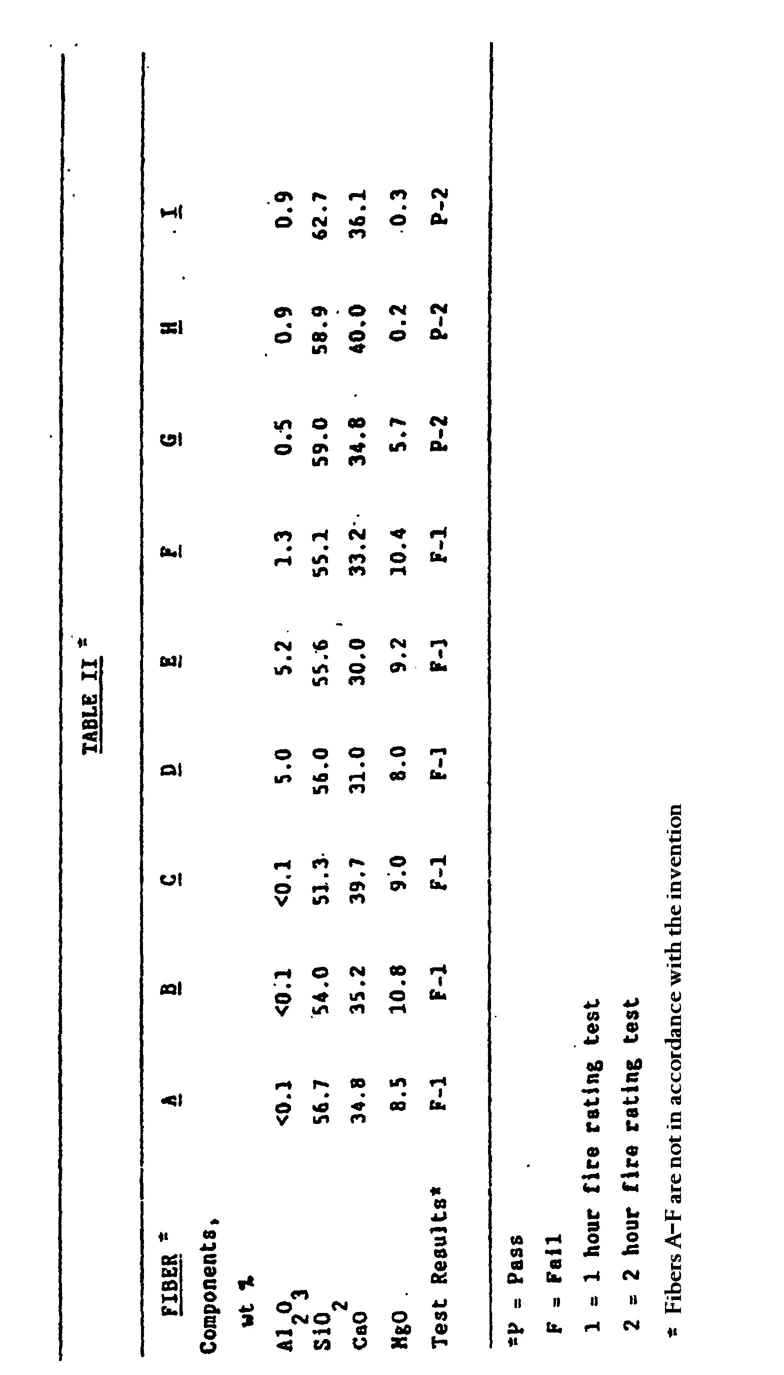

The data in Table II show the clear fire resistance superiority of fibers G through I as compared to fibers A through F. Of special significance is the fact that these compositions attain their fire ratings at bulk densities and fiber diameters that are considerably lower than conventional mineral wool fibers. Fibers G through I attained the desired fire ratings with bulk densities of from 28 to 48 kg/m³ (1-3/4to 3 pcf) and fiber diameters from 1-1/2 to 3-1/2 µm. In comparison, conventional mineral wool fibers attain their fire ratings with bulk densities typically of from 96 to 128 kg/m³ (6 to 8 pcf) and fiber diameters of from 4 to 6 µm.

Thus, the data clearly indicate that these fibers have surprisingly superior heat resistance properties.

### EXAMPLE III

A series of fibers of varying formulations ,which are not in accordance with the invention, listed in Table III were tested for their solubility in a saline solution according to the following procedure: A buffered saline solution was prepared by adding to 6 liters of distilled water the following ingredients at the indicated concentrations:

| Ingredient | Concentration, g/l |
|---|---|
| MgCl₂.6H₂O | 0.160 |
| NaCl | 6.171 |
| KCl | 0.311 |
| Na₂HPO₄ | 0.149 |
| Na₂SO₄ | 0.079 |
| CaCl₂.2H₂O | 0.060 |
| NaHCO₃ | 1.942 |
| NaC₂H₃O₂ | 1.066 |

One (1) gram of each sample of fiber listed in Table III was then placed into separate closed, plastic bottles along with 300 ml of the prepared saline solution and put into an ultrasonic bath for 5 hours. The ultrasonic vibration application was adjusted to give a temperature of 40°C (104°F) at the end of the 5 hour period. At the end of the test period, each saline solution containing the fiber was chemically analyzed for SiO₂ content. The concentration of SiO₂ in the saline solution was taken to be a measure of the amount of fiber which solubilized during the 5 hour test period. The continuous service temperature of each fiber was also measured. The results are given in Table III.

**TABLE III**

| | | | | | | | | |
|---|---|---|---|---|---|---|---|---|
| These fibers are not in accordance with the invention. | | | | | | | | |

| FIBER | FIBER COMPOSITION WT % | | | | | SiO₂ CONCENTRATION | CONTINUOUS | |
|---|---|---|---|---|---|---|---|---|
| | Al₂O₃ | SiO₂ | CaO | MgO | Misc. | IN SALINE SOLUTION AFTER 5 HOURS, ppm | SVC.TEMP °F* | °C |
| A | 46 | 54 | -- | -- | -- | 0.6 | 2400 | 1315 |
| B | 40 | 50 | 6 | 4 | -- | 0.5 | 1600 | 870 |
| C | 23 | 60 | 3 | 14 | -- | 0.7 | 1390 | 755 |
| D | 22 | 48 | 17 | 13 | -- | 0.5 | 1380 | 750 |
| E | 10.7 | 52 | 22 | 16 | -- | 0.7 | 1370 | 743 |
| F | 10.2 | 52 | 21 | 15 | -- | 0.5 | 1370 | 743 |
| G | 8.9 | 52 | 22 | 16 | -- | 1.2 | 1370 | 743 |
| H | 8.7 | 52 | 22 | 16 | -- | 1.7 | 1370 | 743 |
| I | 8.0 | 56 | 30 | 7 | -- | 5.1 | 1390 | 755 |
| J | 9.1 | 40 | 37 | 11 | 2.6 | 7.7 | 1200 | 650 |
| K | 9.3 | 39 | 38 | 14 | -- | 13.0 | 1380 | 750 |
| 1 | 0 | 49 | 28 | 23 | -- | 67.0 | 1380 | 750 |

| | | | | | | | | |
|---|---|---|---|---|---|---|---|---|
| *Temperature for 3% maximum linear shrinkage in 24 hours. | | | | | | | | |

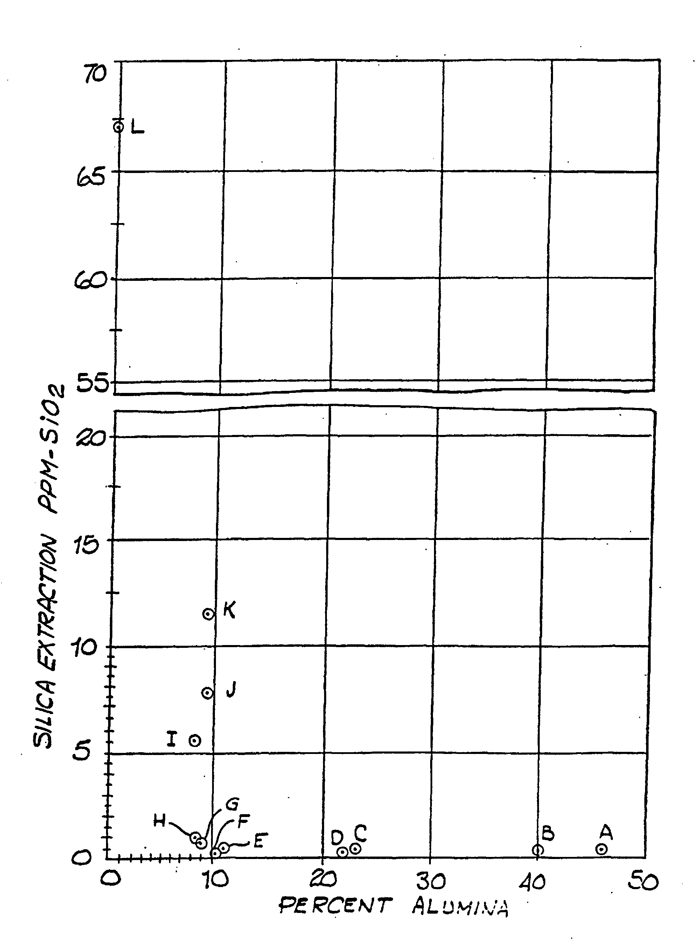

The FIGURE graphically shows the relationship between the alumina content of each fiber and its silica extraction (i.e. solubility) in the prepared saline solution.

The FIGURE clearly shows that fibers G-L which possess 10 wt % or less alumina clearly have a surprisingly higher solubility in the prepared saline solution than fibers A-F which possess higher alumina contents. The surprising nature of Applicants' discovery is clearly apparent by the fact that there is a markedly noticeable difference in solubility between fiber F as compared to fiber G even though their difference in alumina content is relatively small (i.e. 10.2 wt % vs. 8.9 wt %).

The extremely high solubility of fiber L is particularly noted.

## Claims

1. Use as thermal insulation having a service temperature in excess of 1200°F (650°C) of mat or blanket form assemblies of inorganic refractory fibres, the fibres having the composition:-
a) 0.1-8 wt% MgO;
b) 0-4 wt% Al₂O₃
c) 55-64 wt% SiO₂
d) 29-44 wt% CaO.
and no more than 2% by weight of incidental impurities such as any other oxide if present.

## Patentansprüche

1. Verwendung von Anordnungen feuerfester organischer Fasern in Matten- oder Deckenform als thermische Isolierung mit einer Betriebstemperatur oberhalb von 1.200 °F (650 °C), wobei die Fasern die Zusammensetzung
a) 0,1 - 8 Gew.% MgO
b) 0 - 4 Gew.% Al₂O₃;
c) 55 - 64 Gew.% SiO₂
d) 29 - 44 Gew.% CaO
haben und nicht mehr als 2 Gew.% ungewollter Verunreinigungen, wie etwa ein anderes Oxid, vorhanden sind.

## Revendications

1. Utilisation comme isolant thermique ayant une température de service dépassant 1200°F (650°C) d'assemblages de fibres minérales réfractaires sous forme de nappe ou de matelas, les fibres ayant la composition :
a) 0,1 à 8 % en poids de MgO ;
b) 0 à 4 % en poids de Al₂O₃ ;
c) 55 à 64 % en poids de SiO₂ ;
d) 29 à 44 % en poids de CaO ;
et ne contenant pas plus de 2 % en poids d'impuretés fortuites telles que tout autre oxyde s'il y en a.
